# EUROPEAN PATENT SPECIFICATION

(11) **EP 0 648 694 B1**
(45) Date of publication and mention of the grant of the patent: **02.12.1998**
(21) Application number: 94202540.4
(22) Date of filing: 06.09.1994
(51) Int. Cl.: B65G 17/48, B65G 47/84

(54) **A conveyor**
Transportvorrichtung
Convoyeur

(30) Priority: 14.10.1993 NL 9301773
(43) Date of publication of application: 19.04.1995
(73) Proprietor: VANDERLANDE INDUSTRIES NEDERLAND B.V., NL-5466 RB Veghel (NL)
(72) Inventor: Vervoort, Petrus Theodorus Cornelius, NL-5737 PE Lieshout (NL); Van den Goor, Jakobus Marie, NL-5674 SH Nuenen (NL)
(74) Representative: Vollebregt, Cornelis Jacobus, Ir.

(56) References cited:
- EP-A- 0 314 519
- DE-A- 1 955 714
- US-A- 5 191 959

## Description

The invention relates to a conveyor provided with a frame and with an endless drivable transport means, which is fitted with carriers extending transversely to the direction of movement of the transport means and parallel to each other, which carriers are pivotally coupled to at least one endless flexible coupling means, whilst at least some of said carriers support pusher shoes, which are movable along the respective carriers near discharge places by guide means mounted on the frame and by control means cooperating with said guide means and being connected to said pusher shoes, in order to discharge objects which are present on the transport means transversely to the longitudinal direction of said transport means.

Conveyors of this type are for example known from European Patent Application 0084905 or Dutch Patent Application 9100562.

It is noted that from US-A-5,191,959 there is known a conveyor of the above cited type wherein the pusher shoes have been provided with control means formed by rollers. Said rollers have been mounted on shafts which can be shifted with respect to the pusher shoes in order to bring the rollers in desired positions with respect to guide means mounted on the frame of the conveyor.

EP-A-0 314 519 discloses an automatic sorting system comprising moving members. Each moving member supports a slidable rod which can be shifted in its longitudinal direction for co-operating with guide means in order to displace the moving member in a desired way along rods supporting the moving member.

With these known constructions the control means connected to the pusher shoe are usually made up of pins, rollers or the like secured to the pusher shoes, which cooperate with guide means, which can be shifted between a first position, in which the guide means allow the control means to pass without impediment, and a second position, in which the guide means divert the control means transversely to the direction of movement of the transport means, in order to effect that the pusher shoes coupled to the respective control means are moved along the respective carriers.

The shifting of the guide means between the one position and the other takes some time and of course it must be prevented that a control means comes into contact with the guide means during this shifting of the guide means between the one position and the other, since this may cause serious damage to the device.

There is a tendency, however, to increase the working speed of conveyors of this type more and more. The amount of time required for shifting the guide means constitutes a serious impediment, however, when attempting to increase the working speed.

Consequently the object of the invention is to obtain a conveyor of the above kind, wherein this drawback of the known conveyors can be avoided.

According to the invention this can be achieved in that the control means is pivotable about a pivot axis with respect to a respective pusher shoe, between a first position, in which said control means is caught by the guide means, and a second position, in which the control means is able to move beyond the reach of said guide means.

The shifting of the control means of successive pusher shoes, which may be necessary, may take place at a suitable distance from the guide means in question, so that the control means can be moved at a high speed with respect to the guide means and that as a result the working speed of the conveyor can be increased considerably in comparison with the conveyors that have been usual so far.

The invention will be explained in more detail hereafter with reference to a few possible embodiments of the construction according to the invention diagrammatically illustrated in the accompanying Figures.

Figure 1 is a diagrammatic sectional view of a carrier and a pusher shoe supported by said carrier.

Figure 2 diagrammatically shows the mechanism connected to the pusher shoe, by means of which a control means made up of a wheel is connected to the pusher shoe.

Figure 3 is a view corresponding with Figure 2, wherein the mechanism takes up a different position.

Figure 4 diagrammatically shows means by which the control means can be moved from the one position to the other.

Figure 5 is a diagrammatic side view of Figure 4.

Figures 6 and 7 diagrammatically show further means for shifting a control means.

Figures 8 - 10 show further possibilities for movably providing control means.

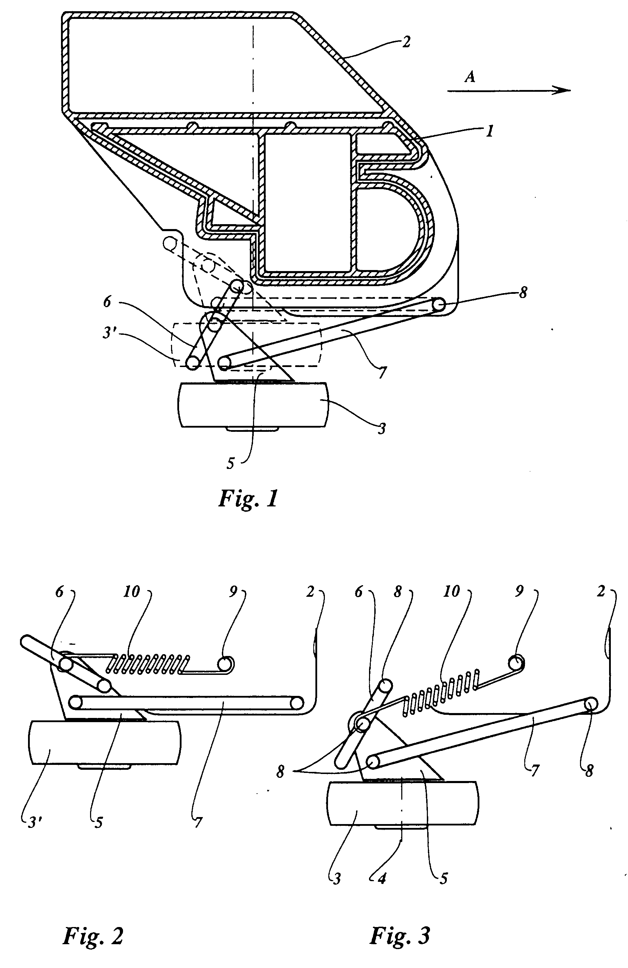

Figure 1 diagrammatically shows a cross-sectional view of a carrier 1.

As is also described in the above-mentioned publications, a large number of carriers are disposed parallel to each other, being interconnected by at least one endless flexible coupling means, for example one or more chains, so that the carriers form a conveyor belt, as it were, which can be moved in its longitudinal direction by driving means, whereby the carriers extend perpendicularly to this direction of movement according to the arrow A.

As is furthermore described in the aforesaid publications, at least one pusher shoe 2 is movable along each of the carriers, in order to push objects present on the carrier(s) from said carriers at desired discharging places. In order to be able to effect said movement of a pusher shoe 2 with respect to a respective carrier 1 a control means is coupled to each pusher shoe, said control means for example being in the shape of a wheel 3 coupled to the pusher shoe, a pin coupled to the pusher shoe or the like. Such control means may cooperate with guide means, for example guide rails, which extend at an angle to the direction of movement according to the arrow A. When a pusher shoe 2 is to be moved along its respective carrier 1, the control means 3 must for example be moved to the position which is illustrated in full lines in Figure 1 and which is illustrated diagrammatically in Figure 3, so that said control means comes into contact with the guide means.

When no movement of the pusher shoe 2 along its carrier 1 is aimed at, however, the control means must be moved to a position in which the control means can freely pass the guide means, for example to the position 3' illustrated in dotted lines in Figure 1 or the position 3' shown in Figure 2, in which the control means can move over the guide means fixedly provided in the frame of the device.

In order to enable such a movement of the control means or wheel 3, which is freely rotatable about a vertically extending axis of rotation 4, a carrying means 5 supporting the wheel 3 is coupled to the respective pusher shoe 2 by means of two coupling rods 6 and 7, which are each pivotally coupled to the carrying means 5 at one end, by means of pivot pins 8 extending parallel to the longitudinal direction of the carrier 1, and which are pivotally coupled to the pusher shoe 2 at the other end, by means of pivot pins 8. A tension spring 10 is provided between one of the pivot pins 8 and a fixed point 9 on the pusher shoe.

It will be apparent that in this embodiment the wheel 3 can be pivoted about an imaginary pivot pin extending parallel to a carrier 1, which is located before the wheel 3, seen in the direction of movement according to arrow A, from the position shown in Figure 3 to the position shown in Figure 2. In the position illustrated in Figure 3 the wheel 3 will for example come into contact with guide means extending transversely to the direction of movement, in order to effect a movement of the pusher shoe 2 with respect to the carrier 1, whilst in the position shown in Figure 2 the wheel 3' can freely move to and fro over said guide means.

When said movement from the one position to the other takes place the tension spring 10 passes the extension of the pivot pin 8 which couples the arm 6 to the pusher shoe. The spring thereby moves through a so-called dead centre, as it were, all this in such a manner that both in the position shown in Figure 2 and in the position shown in Figure 3 the spring tends to keep the wheel 3 in its respective position. Stops (not shown) will be provided, which prevent the various parts from pivoting any further.

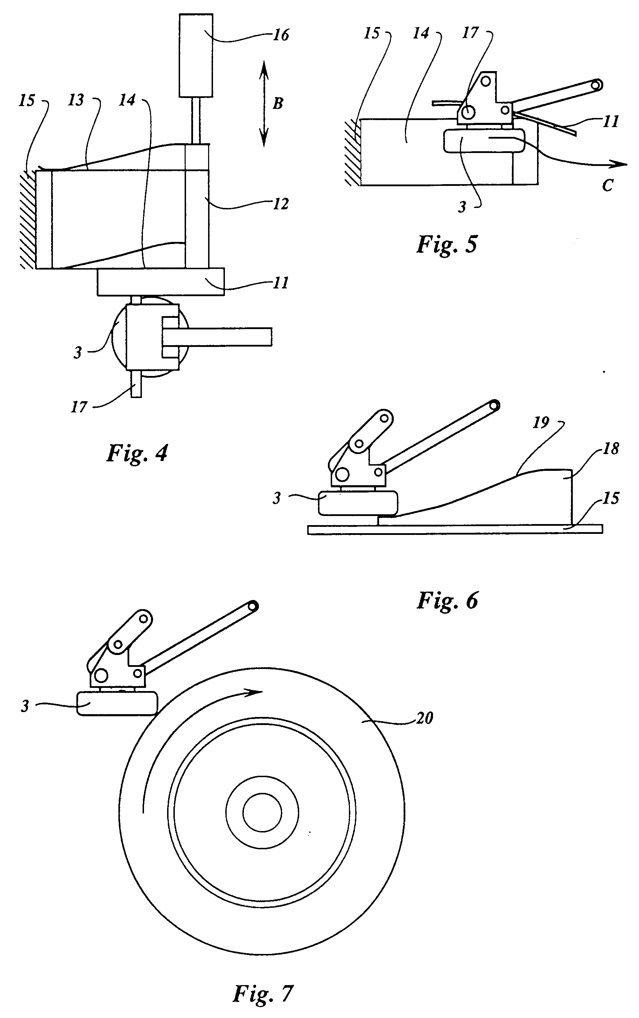

For moving the wheel 3 from the non-operative position shown in Figure 2 to the operative position shown in Figure 3 it will for example be possible to use the construction diagrammatically illustrated in Figures 4 and 5.

As is diagrammatically indicated in Figures 4 and 5, a strip-shaped switch piece 11, which forms a slightly curved guide surface, is carried by a support 12, which is secured to the frame 15 (only diagrammatically indicated) of the device, for example by means of two leaf springs 13 and 14.

The strip-shaped switch means 11 can be moved to and fro by setting means 16, for example a setting cylinder or lifting magnet, as indicated by means of the arrow B. In the position illustrated in Figures 4 and 5 said strip-shaped switch means 11 thereby lies in the path of movement of a pin 17 secured to one end of the arm 6, which pin projects beyond the arm 6 on either side, so that the pin 17 is pushed downwards by the switch piece 11, as indicated by means of the arrow C in Figure 5, thus moving the wheel 3 from the position shown in Figure 2 to the position shown in Figure 3.

Because the pin 17 projects on either side said pin can cooperate with switch pieces 11 disposed on either side of the path of movement of the wheel 3.

It will be apparent that when no shifting of the wheel 3 from the position shown in Figure 2 to the position shown in Figure 3 is desired, the switch means will be withdrawn from the path of movement of the pin 17 by the setting means 16.

The shifting back of the wheel 3 from the position shown in Figure 3 to the position shown in Figure 2 may generally take place at a fixed point of the device. For this purpose a fixedly disposed guide means 18 may be secured to the frame 15 of the device, as shown in Figure 6. Said guide means 18 thereby has a curved surface 19, along which the wheel 3 or for example the pin 17 connected to the wheel can be guided, in order to push back the wheel 3 from the position shown in Figure 3 to the position shown in Figure 2.

Another possibility is to use a rotating guide means 20, as illustrated in Figure 7, whose outer circumference is in turn engaged by the wheel 3 or for example by the pin 17.

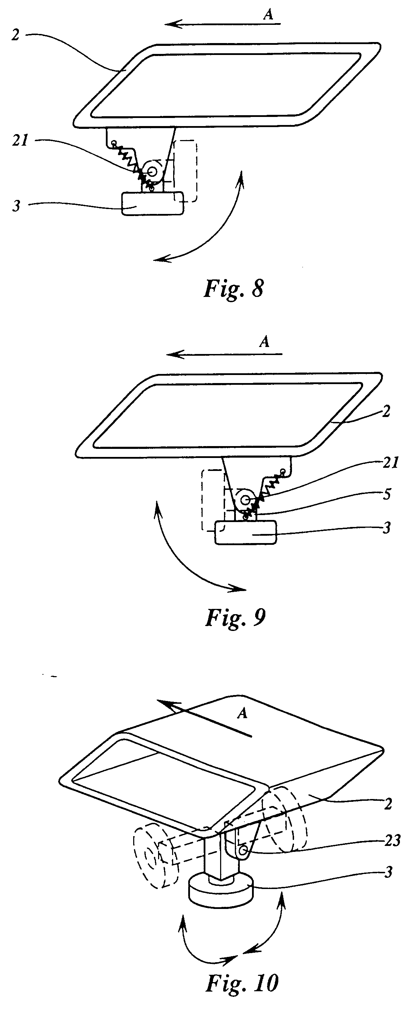

Of course variations and/or additions to the above-described embodiment are conceivable. Thus Figures 8 and 9 for example show an embodiment wherein a carrying piece 5 of a wheel-shaped control means 3 is coupled to a pusher shoe 2 by means of a pivot pin 21 extending parallel to the longitudinal axis of a carrier supporting the pusher shoe, said pivot pin 21 in the illustrated embodiment being located above the control means, which is in its operative position. The wheel 3 can thereby be pivoted through 90° from the operative position illustrated in full lines in the Figures to the non-operative position illustrated in dotted lines, in which position the control means can freely pass the guide means without coming into contact therewith.

As will furthermore be apparent from Figures 8 and 9 the construction may thereby be such that the wheel 3 can be pivoted from the operative position to the non-operative position against the direction of movement of the carrier (Figure 8) or in the direction of movement of the carrier (Figure 9). Furthermore an embodiment having both possibilities will be conceivable. The wheel 3 can thereby be pivoted in a similar manner between the various positions.

Figure 10 shows an embodiment wherein the wheel 3 is pivotable with respect to the pusher shoe 2 about a pivot pin 23 extending parallel to the direction of movement according to the arrow A. Also in this embodiment a movement in the one and/or the other direction from the operative position illustrated in full lines, by pivoting through 90° to the non-operative position can be realized in a similar manner as in the preceding embodiments.

## Claims

1. A conveyor provided with a frame and with an endless drivable transport means, which is fitted with carriers (1) extending transversely to the direction of movement (A) of the transport means and parallel to each other, which carriers (1) are pivotally coupled to at least one endless flexible coupling means, whilst at least some of said carriers (1) support pusher shoes (2), which are movable along the respective carriers (1) near discharge places by guide means mounted on the frame and by control means (3) cooperating with said guide means and being connected to said pusher shoes (2), in order to discharge objects which are present on the transport means transversely to the longitudinal direction of said transport means, characterized in that the control means (3) is pivotable about a pivot axis (8) with respect to a respective pusher shoe (2), between a first position, in which said control means (3) is caught by the guide means, and a second position (3'), in which the control means (3) is able to move beyond the reach of said guide means.

2. A conveyor according to claim 1, characterized in that the control means (3) is pivotable about a pivot axis (8) which extends at least substantially parallel to the longitudinal direction of the carrier (1).

3. A conveyor according to claim 1 or 2, characterized in that said pivot axis (8) is located before the control means (3), seen in the intended direction of movement (A) of the transport means.

4. A conveyor according to any one of the preceding claims, characterized in that said control means (3) is made up of a freely rotatable roller.

5. A conveyor according to any one of the preceding claims, characterized in that said control means (3) moves through a dead centre when moving from the one position (3) to the other (3'), and that spring means (10) are provided, which attempt to keep said control means (3) in the one or the other position.

## Patentansprüche

1. Förderer mit einem Rahmen und einem antreibbaren endlosen Transportmittel, das mit Trägern (1) versehen ist, die sich quer zur Bewegungsrichtung (A) des Transportmittels und parallel zueinander erstrecken, wobei die Träger (1) an mindestens ein endloses flexibles Kopplungsmittel gelenkig gekoppelt sind, während zumindest einige der Träger (1) Mitnehmer (2) tragen, die über an dem Rahmen angebrachte Führungsmittel und über ein mit den Führungsmitteln zusammenwirkendes und an den Mitnehmern (2) befestigtes Steuermittel (3) entlang der jeweiligen Träger (1) nahe Entladestellen bewegbar sind, um Gegenstände, welche sich auf dem Transportmittel befinden, quer zur Längsrichtung des Transportmittels zu entladen, dadurch gekennzeichnet, daß das Steuermittel (3) um eine Drehachse (8) in bezug auf einen zugeordneten Mitnehmer (2) zwischen einer ersten Position, in welcher das Steuermittel (3) von den Führungsmitteln erfaßt wird, und einer zweiten Position (3'), in welcher das Steuermittel (3) in der lage ist, sich außerhalb der Reichweite der Führungsmittel zu bewegen, drehbar ist.

2. Förderer nach Anspruch 1, dadurch gekennzeichnet, daß das Steuermittel (3) um eine Drehachse (8) herum drehbar ist, welche sich zumindest im wesentlichen parallel zur Längsrichtung des Trägers (1) erstreckt.

3. Förderer nach Anspruch 1 oder 2, dadurch gekennzeichnet, daß die Drehachse (8) vor dem Steuermittel (3), gesehen in der beabsichtigten Bewegungsrichtung (A) des Transportmittels, angeordnet ist.

4. Förderer nach einem der vorangehenden Ansprüche, dadurch gekennzeichnet, daß das Steuermittel (3) aus einer frei drehenden Rolle besteht.

5. Förderer nach einem der vorangehenden Ansprüche, dadurch gekennzeichnet, daß das Steuermittel (3), wenn es sich von der einen Position (3) zu der anderen Position (3') bewegt, einen Totpunkt durchläuft, und daß Federmittel (10) vorgesehen sind, die versuchen, das Steuermittel (3) in der einen oder der anderen Position zu halten.

## Revendications

1. Convoyeur comprenant un châssis et un moyen de transport entraînable sans fin, qui est équipé d'éléments porteurs (1) s'étendant transversalement à la direction de mouvement (A) du moyen de transport et mutuellement parallèles, lesdits éléments porteurs (1) étant reliés de façon pivotante à au moins un moyen de couplage souple sans fin tandis qu'au moins certains desdits éléments porteurs (1) supportent des sabots de poussoir (2) qui sont déplaçables le long des éléments porteurs respectifs (1) près d'endroits de déchargement par un moyen de guidage monté sur le châssis et par un moyen de commande (3) coopérant avec ledit moyen de guidage et étant connecté aux dits sabots de poussoir (2), afin de décharger les objets qui sont présentés sur le moyen de transport transversalement à la direction longitudinale dudit moyen de transport, caractérisé en ce que le moyen de commande (3) peut pivoter autour d'un axe de pivot (8) par rapport à un sabot de poussoir respectif (2) entre une première position dans laquelle ledit moyen de commande (3) esten prise avec le moyen de guidage, et une deuxième position(3') dans laquelle le moyen de commande (3) peut se déplacer hors d'atteinte dudit moyen de guidage.

2. Moyen suivant la revendication 1, caractérisé en ce que le moyen de commande (3) peut pivoter autour d'un axe de pivot (8) qui s'étend au moins sensiblement parallèlement à la direction longitudinale de l'élément porteur (1)

3. Convoyeur suivant la revendication 1 ou 2, caractérisé en ce que ledit axe de pivot (8) est placé avant le moyen de commande (3), vu dans la direction prévue de mouvement (A) du moyen de transport.

4. Convoyeur suivant une quelconque des revendications précédentes, caractérisé en ce que ledit moyen de commande (3) est constitué d'une roue pouvant tourner librement.

5. Convoyeur suivant une quelconque des revendications précédentes, caractérisé en ce que ledit moyen de commande (3) passe par un point mort quand il se déplace d'une position (3) à l'autre (3'), en ce qu'il est prévu un moyen élastique (10), qui tend à maintenir ledit moyen de commande (3) dans l'une ou l'autre position.
